# EUROPÄISCHE PATENTSCHRIFT

(11) **EP 3 593 003 B1**
(45) Veröffentlichungstag und Bekanntmachung des Hinweises auf die Patenterteilung: **08.06.2022**
(21) Anmeldenummer: 18710313.0
(22) Anmeldetag: 22.02.2018
(51) Int. Cl.: F16D 13/64, F16D 13/68

(54) **LAMELLENTRÄGERZENTRIERUNG FÜR P2-HYBRIDSYSTEME**
LAMELLA CARRIER CENTRING FOR P2 HYBRID SYSTEMS
CENTRAGE DE SUPPORT DE LAMELLE POUR SYSTÈMES HYBRIDES P2

(30) Priorität: 06.03.2017 DE 102017104576; 08.12.2017 DE 102017129275
(43) Veröffentlichungstag der Anmeldung: 15.01.2020
(73) Patentinhaber: Schaeffler Technologies AG & Co. KG, 91074 Herzogenaurach (DE)
(72) Erfinder: HOPPE, Marcus, 77855 Achern (DE); PIEPER, Torsten, 76137 Karlsruhe (DE)
(86) Internationale Anmeldenummer: PCT/DE2018/100153
(87) Internationale Veröffentlichungsnummer: WO 2018/161998

(56) Entgegenhaltungen:
- WO-A1-91/14878
- WO-A1-2018/077336
- DE-A1-102010 029 306
- FR-A5- 2 163 143
- US-A- 5 908 100

## Beschreibung

Die vorliegende Erfindung betrifft eine Kupplung für einen Antriebsstrang eines Kraftfahrzeugs, mit einem Drehmomenteinleitungsteil, das zur Drehmomentübergabe mit einem Drehmomentausleitungsteil verbindbar ist, wobei das Drehmomentausleitungsteil drehfest mit einem Drehmomentweiterleitungsteil verbunden ist. Ferner betrifft die Erfindung auch ein Hybridmodul für einen Antriebsstrang eines Kraftfahrzeugs mit einem ersten Antriebsaggregat, wie bspw. einer Verbrennungskraftmaschine, und einem zweiten Antriebsaggregat, wie bspw. einer E-Maschine, die über eine erfindungsgemäße Kupplung mit einer Antriebswelle drehmomentübertragend verbindbar sind. Hybridmodule sind bzgl. ihrer Anordnungsstruktur der Antriebsaggregate, üblicherweise ein Verbrennungsmotor und eine E-Maschine, zu unterscheiden. So ist bspw. unter einer P2-Anordnung eine solche Anordnung zu verstehen, bei der die E-Maschine nicht direkt am Verbrennungsmotor verbaut ist, sondern sich am Getriebeeingang mit einer dazwischenliegenden Kupplung befindet. Dadurch ist der Verbrennungsmotor vom restlichen Antriebsstrang abkoppelbar und die elektrische Fahrt sowie die Rekuperation sind in einem wesentlich effizienteren Rahmen, ohne die Einbußen des Schleppmoments des Verbrennungsmotors, möglich. Solche Hybridmodule werden dann auch üblicherweise als P2-Hybridmodule bezeichnet.

Ferner unterscheidet man bei Hybridmodulen zwischen achsparallelen und koaxialen Hybridmodulen. Bei achsparallelen Hybridmodulen sind die Ausgangswellen der beiden Antriebsaggregate, in der Regel ein Verbrennungsmotor und eine E-Maschine, parallel zueinander ausgerichtet. Bei koaxialen Hybridmodulen sind diese Ausgangswellen koaxial, das heißt, zueinander fluchtend, angeordnet. Das bedeutet, sie haben dieselbe Rotationsachse.

Kupplungen sind aus dem Stand der Technik bereits hinreichend bekannt. Bezüglich der Hybridmodule werden diese häufig als Trennkupplungen eingesetzt. Siehe WO 2018 077336, DE 102010029306, WO 9114878, FR 2163143 und US5908100 als Stand der Technik.

Die DE 10 2015 211 436 A1 betrifft eine Antriebsanordnung mit einem Eingangselement zur Verbindung mit einer Verbrennungskraftmaschine und mit einer elektrischen Maschine, und mit einem Ausgangselement zur Verbindung der Antriebsanordnung mit einer Getriebeeingangswelle eines nachgeordneten Getriebes, wobei als Anfahrelement eine Reibungskupplung vorgesehen ist, welche den Rotor der elektrischen Maschine mit dem Ausgangselement koppelt und mit einer Klauenkupplung, welche die Verbrennungskraftmaschine bei geschlossener Reibungskupplung mit dem Eingangselement der Reibungskupplung koppelt, wobei ein Betätigungsmittel für die Reibungskupplung und ein Betätigungsmittel für die Klauenkupplung vorgesehen sind, welche von einem Betätigungselement beaufschlagbar sind, wobei das Betätigungselement in eine erste Betätigungsrichtung verlagerbar ist, um das Betätigungsmittel zur Betätigung der Klauenkupplung zu beaufschlagen und in eine zweite Betätigungsrichtung verlagerbar ist, um das Betätigungsmittel zur Betätigung der Reibungskupplung zu beaufschlagen.

Die DE 10 2009 059 944 A1 offenbart ein Hybridmodul für einen Antriebsstrang eines Fahrzeuges. Das darin offenbarte Hybridmodul weist eine erste Trennkupplung, einen Elektromotor und eine zweite Trennkupplung auf, wobei die erste Trennkupplung im Momentenfluss zwischen einem Verbrennungsmotor im Antriebsstrang und dem Elektromotor und die zweite Trennkupplung im Momentenfluss zwischen Elektromotor und einem Getriebe im Antriebsstrang angeordnet sind, wobei die erste Trennkupplung und die zweite Trennkupplung in einem gemeinsamen Nassraum angeordnet sind.

Bisher werden Bauteile, bspw. durch Niete miteinander verbunden, wobei es üblich ist, dass die Bauteile in einem Montageträger zueinander zentriert und dann miteinander vernietet werden. Jedoch besteht hierbei das Problem, dass der Montageträger ebenfalls toleranzbehaftet ist und somit die Bauteile für bekannte Anwendungen zwar hinreichend genau zentriert sind, für die Anwendung in einem P2-Hybridmodul jedoch nicht.

In einem P2-Hybridmodul darf der Lamellenträger möglichst keinen Versatz zur Nabe haben, damit die Riemenscheibe oder das Rotorpaket des Elektromotors absolut konzentrisch zur Nabe und damit zur Welle des Hybridmoduls ausgerichtet ist. Es ist bei achsparallelen P2-Hybridsystemen wichtig, damit die Riemenscheibe rund läuft und somit die Riemenspannkraft immer konstant bleibt. Bei koaxialen P2-Hybridsystemen ist es fast noch wichtiger, da der Lamellenträger den Rotor der E-Maschine trägt und somit ein Versatz des Lamellenträgers direkten Einfluss auf den Luftspalt zwischen Rotor und Stator der E-Maschine und damit auf den Wirkungsgrad der E-Maschine hat.

Aufgabe der Erfindung ist es, die Nachteile aus dem Stand der Technik zu vermeiden oder wenigstens zu mildern, und insbesondere eine Möglichkeit vorzusehen, Bauteile in einem P2-Hybridmodul möglichst exakt zueinander zu zentrieren.

Die Aufgabe der Erfindung wird bei einer gattungsgemäßen Kupplung erfindungsgemäß dadurch gelöst, wie im Anspruchssatz definiert ist.

Vorteilhafte Ausführungsformen sind in den Unteransprüchen beansprucht und werden nachfolgend erläutert.

So ist es von Vorteil, wenn das Drehmomentweiterleitungsteil einteilig oder mehrteilig ausgebildet ist.

Für das mehrteilige Drehmomentweiterleitungsteil hat es sich als vorteilhaft gezeigt, wenn das Drehmomentweiterleitungsteil eine Nabe und eine Zwischenwelle aufweist, wobei die Nabe auf der Zwischenwelle angeordnet ist. Dabei ist es möglich, die Kupplung vorab auf der Nabe zu montieren und anschließend die Kupplung zusammen mit der Nabe als Baugruppe auf die Zwischenwelle zu montieren.

Hierbei ist es von Vorteil, wenn der Zentrierbund an der Nabe ausgebildet ist. Dabei ist es von Vorteil, wenn der Zentriersitz an einem Innendurchmesser und/oder als Vorsprung oder Absatz des Drehmomentausleitungsteils ausgebildet ist.

Eine alternative Ausführungsform sieht vor, dass das Drehmomentausleitungsteil über einen Presssitz auf dem Drehmomentweiterleitungsteil angeordnet bzw. montiert ist.

Erfindungsgemäss ist die Kupplung als eine Lamellenkupplung mit einer Tellerfeder als Vorspannelement ausgebildet.

Hierbei hat es sich als vorteilhaft gezeigt, wenn Verbindungsniete und/oder Verbindungsbolzen, die das Drehmomentausleitungsteil und das Drehmomentweiterleitungsteil drehfest verbinden, als Zentrierung und/oder Umfangspositionierung der Tellerfeder dienen.

Erfindungsgemäss ist der Zentrierbund zum Kontaktieren und Zentrieren der Tellerfeder, etwa über deren Innendurchmesser, ausgelegt.

Mit anderen Worten besteht die Erfindung darin, dass der Innendurchmesser des Lamellenträgers einen Zentriersitz aufweist, der z.B. gedreht oder gestanzt sein kann.

Dieser ist passend für einen Zentrierbund an der Nabe der Trennkupplung (K0-Kupplung). Die Teile werden also vor der Vernietung nicht, wie üblich im Montageträger zueinander zentriert, sondern direkt zueinander. Auch ein Presssitz ist denkbar, um das Zentrierspiel quasi auf null zu reduzieren.

Gleichzeitig können die Niete bzw. Bolzen, die zur Vernietung von Nabe und Lamellenträger verwendet werden, als Zentrierbolzen für die Tellerfeder verwendet werden. Dadurch wird gewährleitstet, dass auch dieses Bauteil sehr genau zur Nabe zentriert ist und damit wenig Unwucht des Zusammenbaus verursacht. Ist eine Positionierung der Tellerfeder in Umfangsrichtung nicht zwingend notwendig, kann für die Zentrierung der Tellerfeder auch der gleiche Zentrierdurchmesser wie für den Lamellenträger verwendet werden. Da der innere Auflagedurchmesser der Tellerfeder sehr nahe am Zentrierdurchmesser (Innendurchmesser) ist und sich der Tellerfeder-Innendurchmesser über den Schwenkweg nur wenig ändert, können die Toleranzen sehr eng gewählt werden, wodurch nur ein geringer Versatz und eine geringe Unwucht auftreten.

Mit anderen Worten umfasst ein Innendurchmesser des Innenlamellenträgers einen Zentriersitz und eine Nabe umfasst einen Zentrierflansch bzw. einen Zentrierbund als ein Gegenstück zum Zentriersitz, um somit den Lamellenträger bzgl. der Nabe zu zentrieren.

Die Erfindung wird nachfolgend mit Hilfe von Figuren näher erläutert, in denen unterschiedliche Ausführungsformen dargestellt sind. Es zeigen:
- Fig. 1: eine Längsschnittansicht eines Hybridmoduls;
- Fig. 2: den Längsschnitt aus Fig. 1 in einer perspektivischen Ansicht;
- Fig. 3: die Längsschnittansicht aus Fig. 1 zur Erläuterung von Wirkzusammenhängen;
- Fig. 4: einen Ausschnitt des Längsschnitts des Hybridmoduls im Bereich einer Kupplung bzw. Zwischenwelle;
- Fig. 5: eine Nabe und einen Innenlamellenträger im Längsschnitt des achsparallelen Hybridmoduls;
- Fig. 6: die Nabe und den Innenlamellenträger eines koaxialen Hybridmoduls;
- Fig. 7: die Nabe mit dem Innenlamellenträger und daran montierter Tellerfeder in Längsschnittansicht in einer ersten Ausführungsform;
- Fig. 8: eine vergrößerte perspektivische Darstellung der an der Nabe montierten Tellerfeder im Bereich eines Zentrierbolzens der ersten Ausführungsform;
- Fig. 9: eine zweite mögliche Ausführungsform der Zentrierung der Tellerfeder auf der Nabe in einer Längsschnittansicht; und
- Fig. 10: die zweite Ausführungsform zur Zentrierung der Tellerfeder an der Nabe in einer perspektivischen Ansicht.

Die Figuren sind lediglich schematischer Natur und dienen nur dem Verständnis der Erfindung. Die gleichen Elemente sind mit denselben Bezugszeichen versehen.

Merkmale der einzelnen Ausführungsbeispiele können auch in anderen Ausführungsbeispielen realisiert werden. Sie sind also untereinander austauschbar.

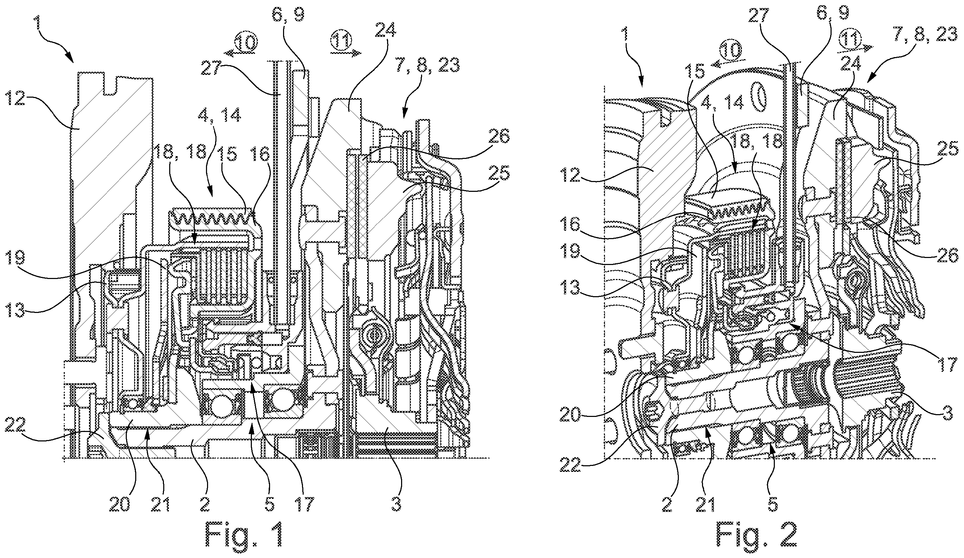

Die Fign. 1 und 2 zeigen einen Längsschnitt eines Hybridmoduls 1 als Schnittansicht (Fig. 1) bzw. in perspektivischer Ansicht (Fig. 2). Das Hybridmodul 1 weist eine Zwischenwelle 2 sowie eine davon separate Antriebswelle 3 auf. Die Antriebswelle 3 dient als Getriebeeingangswelle. Über eine Trennkupplung 4, welche auf der Zwischenwelle 2 montiert ist, ist es möglich, ein erstes Antriebsaggregat (nicht gezeigt) und/oder ein zweites Antriebsaggregat (nicht gezeigt) drehmomentübertragend mit der Zwischenwelle 2 zu verbinden. Die Zwischenwelle 2 ist über eine Stützlagerung 5 an einem Gehäuse 6 des Hybridmoduls 1 abgestützt. Mit der Antriebswelle 3 und der Zwischenwelle 2 ist ein Anfahrelement 7, ebenfalls in Form einer Kupplung 8, verbunden.

Das Gehäuse 6 weist eine Zwischenwand 9 auf, bzgl. welcher das Hybridmodul 1 in eine Motorseite 10 und eine Getriebeseite 11 aufgeteilt werden kann. Auf der Motorseite 10 befinden sich das erste Antriebsaggregat und das zweite Antriebsaggregat, welche hier nicht gezeigt sind. Als erstes Antriebsaggregat dient bspw. eine Verbrennungskraftmaschine, die über ein Zweimassenschwungrad, welches an einer Kurbelwelle (nicht gezeigt) der Verbrennungskraftmaschine angebracht ist, mit einem Außenlamellenträger 13, der als Lamellenkupplung 14 ausgebildeten Trennkupplung 4 verbunden ist.

Das zweite Antriebsaggregat ist bspw. in Form einer E-Maschine, wie einem E-Motor (nicht gezeigt), ausgebildet und über einen Riemen 15 mit einem Innenlamellenträger 16 mit der Trennkupplung 4 drehmomentübertragend verbunden. Die Trennkupplung 4 wird über eine Aus- / Einrückvorrichtung 17 betätigt. Die Lamellenpakete 18 (Reib- und Stahllamellen) werden über eine Tellerfeder 19 vorgespannt.

Die Trennkupplung 4 ist als eine gesamte Einheit auf einer Nabe 20 angeordnet, die über eine Welle-Nabe-Verbindung 21 mit der Zwischenwelle 2 drehmomentübertragend verbunden ist. Die Nabe 20 ist über eine Zentral- bzw. Sicherungsschraube 22 gegen Axialverschiebung gesichert.

Auf der Getriebeseite 11 befindet sich das Anfahrelement 7, in der gezeigten Ausführungsform, welches als eine Einfachkupplung 23 ausgebildet ist. Die Einfachkupplung 23 ist über ein Schwungrad 24, welches hier zweiteilig ausgeführt ist, mit der Zwischenwelle 2 verbunden. Über eine Kupplungsscheibe 25 und einem Reibelement 26 ist die Einfachkupplung 23 mit der Antriebswelle 3 drehmomentübertragend verbunden.

Die Trennkupplung 4 kann auch als K0-Kupplung und die Kupplung 8 kann auch als K1-Kupplung bezeichnet werden. Zur Betätigung der Aus- / Einrückvorrichtung 17 der Trennkupplung 4 weist das Gehäuse 6 eine Leitung 27 auf, über die bspw. ein Hydraulikmittel zugeführt werden kann.

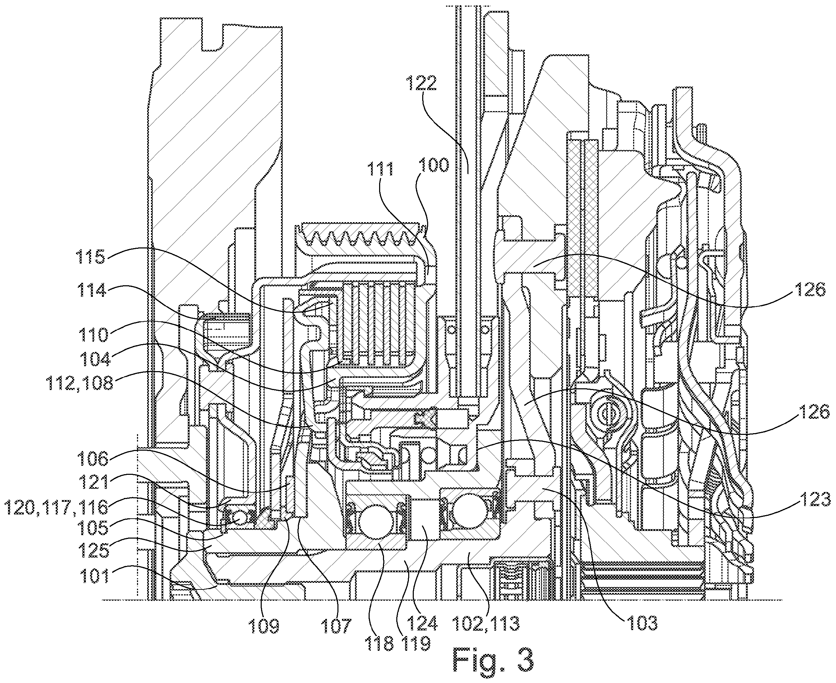

Fig. 3 zeigt die identische Ansicht zur Fig. 1, wobei hier ein Augenmerk auf Wirkungszusammenhänge gelegt ist. Hierbei bezeichnet das Bezugszeichen 100, dass eine Riemenscheibe und ein Lamellenträger einteilig oder mehrteilig ausgeführt sind.

Das Bezugszeichen 101 bezeichnet, dass eine axiale Sicherung und Kraftabstützung einer Trennkupplung über eine Verschraubung zu einer Zwischenwelle ausgeführt ist.

Das Bezugszeichen 102 bezeichnet eine Zwischenwelle als Abstützung (radial und axial) für einen Kupplungsdeckel, eine Doppelkupplung, einen Wandler etc.

Das Bezugszeichen 103 bezeichnet eine Verschraubung, Vernietung oder Verschweißung etc. eines Schwungrads und z.B. eines Kupplungsdeckels, einer Doppelkupplung oder eines Wandlers etc. an der Zwischenwelle.

Das Bezugszeichen 104 bezeichnet einen Innenlamellenträger, der als ein Verschleißanschlag für einen Drucktopf dient.

Das Bezugszeichen 105 bezeichnet, dass ein Abziehen der Trennkupplung von der Zwischenwelle über eine Nutzung einer Nut für einen Sicherungsring (oder einer separaten Nut) und eines Gewindes der Zwischenwelle möglich ist.

Das Bezugszeichen 106 bezeichnet, dass eine Vernietung des Lamellenträgers mit einer Nabe gleichzeitig zur Zentrierung einer Tellerfeder genutzt wird.

Das Bezugszeichen 107 bezeichnet, dass der Lamellenträger über einen separaten Zentrierdurchmesser mit der Nabe verbunden ist.

Das Bezugszeichen 108 bezeichnet, dass ein Innenlamellenträger auch als ein Anschlag für ein Einrücksystem dient.

Das Bezugszeichen 109 bezeichnet, dass ein Toleranzausgleich einer Tellerfederkraft durch Shimmen mit unterschiedlichen Höhen eines Abstützringes erfolgt.

Das Bezugszeichen 110 bezeichnet, dass eine axiale Bauraumersparnis durch abgeknickte Füße (Verzahnung) einer Anpressplatte erzielt wird.

Das Bezugszeichen 111 bezeichnet, dass der Innenlamellenträger zusätzliche Löcher für Stifte aufweist, um Reiblamellen bei der Montage zu positionieren.

Das Bezugszeichen 112 bezeichnet, dass der Innenlamellenträger als Zentrierung für den Drucktopf dient.

Das Bezugszeichen 113 bezeichnet, dass im Falle einer Doppelkupplung als eine Anfahrkupplung ein Stützlager der Trennkupplung auch die Lagerung der Doppelkupplung übernimmt. Es gibt eine feste Verbindung der Doppelkupplung mit einer Innenwelle der Trennkupplung. Es ist kein Doppelkupplungslager (auf einer Getriebewelle) vorgesehen.

Das Bezugszeichen 114 bezeichnet, dass keine Verspanneinrichtung von einem Zweimassenschwungrad und einer Trennkupplung vorgesehen ist. Verzahnungsgeräusche treten nur bei Leerlauf auf. Ein Leerlauf der Brennkraftmaschine ist keine vorgesehene Betriebsart. Mit der E-Maschine kann stets ein Moment auf einer Verzahnung liegen.

Das Bezugszeichen 115 bezeichnet, dass eine Anpressplatte als eine Zentrierung für eine Modulationsfeder dient.

Das Bezugszeichen 116 bezeichnet, dass eine Nabe als ein Träger für ein Lager für einen Außenlamellenträger dient.

Das Bezugszeichen 117 bezeichnet, dass ein Innenring des Lagers des Außenlamellenträgers in die Nabe integriert ist.

Das Bezugszeichen 118 bezeichnet, dass ein Innenring des Lagers, z.B. eines Rillenkugellagers, der Zwischenwelle in die Nabe integriert ist.

Das Bezugszeichen 119 bezeichnet, dass die Nabe als ein Träger für ein Stützlager dient.

Das Bezugszeichen 120 bezeichnet, dass das Lager für den Außenlamellenträger separat auf einer Zwischenwelle und nicht auf der Nabe gelagert ist.

Das Bezugszeichen 121 bezeichnet, dass der Außenlamellenträger als ein Außenring für Lager, z.B. ein Blechlager, dient.

Das Bezugszeichen 122 bezeichnet, dass eine Leitung für einen Zentralausrücker bzw. CSC bzw. Concentric Slave Cylinder in einer Blech- oder Materialdicke einer Zwischenwand verschwindet.

Das Bezugszeichen 123 bezeichnet, dass der Zentralausrücker mit einem Flansch und einer Lagerträgereinheit an die Zwischenwand geschraubt, genietet oder verschweißt ist. Der Zentralausrücker ist nur aufgesteckt und nicht verschraubt.

Das Bezugszeichen 124 bezeichnet, dass ein Bauraum zwischen Lagern der Zwischenwelle und der Zwischenwand zum Messen von Drehmoment, Temperatur, Drehzahl, Position (Resolver) usw., bzw. für Einrichtungen zum Messen von Werten dieser Größen verwendet wird.

Das Bezugszeichen 125 bezeichnet, dass eine Demontage der Trennkupplung ohne eine Demontage des Hybridmoduls möglich ist. Alternativ können die Trennkupplung und die Anfahrkupplung eine Liefereinheit inklusive der Zwischenwand und des Rotors der E-Maschine sein. Ebenso kann ein Komplettmodul mit Gehäuse, Stator, Kühlung, Elektronik, Aktorik, usw. vorgesehen sein.

Das Bezugszeichen 126 bezeichnet, dass ein Schwungrad für die Anfahrkupplung zweiteilig ausgeführt ist, um einen axialen Bauraum zu sparen. Eine Vernietung von Guss mit Blech ist außerhalb, innerhalb oder unterhalb einer Reibfläche möglich.

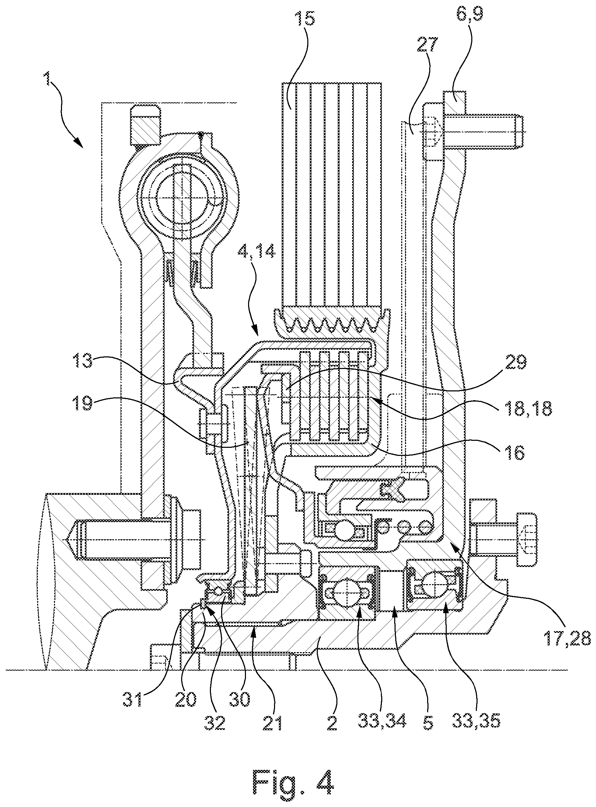

Fig. 4 zeigt einen Ausschnitt des Hybridmoduls 1 im Bereich der Zwischenwelle 2 als Längsschnittansicht. Die Trennkupplung 4, welche auch als K0-Kupplung bezeichnet werden kann, ist in der hier gezeigten Ausführungsform eine "normally-closed"-Kupplung mit einem CSC (Concentric Slave Cylinder) bzw. einem Nehmerzylinder 28 als eine Aus- / Einrückvorrichtung 17. Die Trennkupplung 4, die als Lamellenkupplung 14 ausgebildet ist, kann als eine Trockenkupplung oder eine Nasskupplung ausgeführt sein. Der Innenlamellenträger 16 dient, wie vorstehend bereits erwähnt, als Riemenscheibenträger für den Riemen 15. Alternativ, insbesondere für ein koaxiales Hybridsystem (nicht gezeigt) kann der Innenlamellenträger 16 auch als Rotorträger der E-Maschine dienen. Darüber hinaus kann eine Modulationsfeder 29 vorgesehen sein. Der Außenlamellenträger 13 ist über ein Lager 30 auf der Nabe 20 gelagert. Das Lager 30 ist über einen Sicherungsring 31, der in einer entsprechenden Nut 32 in der Nabe 20 eingesetzt ist, gegen Axialverschiebung gesichert. Die Zwischenwelle 2 wird über die Stützlagerung 5 an dem Gehäuse 6, genauer an der Zwischenwand 9 abgestützt. Die Stützlagerung 5 weist in der hier gezeigten Ausführungsform zwei Lager 33 auf, wovon eins als Rillenkugellager 34 und das zweite als ein Schrägkugellager 35 ausgebildet ist.

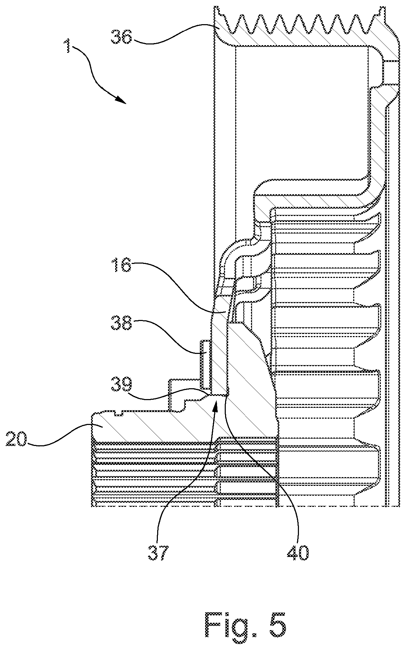

Fig. 5 zeigt in einer Längsschnittansicht die Nabe 20 mit daran montiertem und dazu zentriertem Innenlamellenträger 16 für ein achsparalleles Hybridmodul 1. Hierbei ist der Innenlamellenträger 16 integral einteilig mit einer Riemenscheibe 36 ausgebildet, über die die E-Maschine (nicht gezeigt) über den Riemen 15 (siehe Fig. 1) direkt mit dem Innenlamellenträger 16 drehmomentübertragend verbindbar ist. Der Innenlamellenträger 16 wird über einen Zentrierbereich 37 relativ zu der Nabe 20 zentriert und mittels eines Zentrierbolzens 38 drehfest mit der Nabe 20 verbunden. Der Zentrierbereich 37 weist zum einen Zentrierbund 39 an der Nabe 20 auf, der passend zu einem Zentriersitz 40 an einem Innendurchmesser des Innenlamellenträgers 16 ausgebildet ist. Der Zentrierbolzen 38 dient dazu, dass sich die Nabe 20 und der Innenlamellenträger 16 in Umfangsrichtung nicht zueinander verdrehen können. Es können auch mehrere Zentrierbolzen 38 über den Umfang verteilt angeordnet sein.

Der Zentriersitz 40 kann z.B. gedreht oder gestanzt werden. Auch ist es denkbar, dass der Innenlamellenträger 16 mittels eines Presssitzes auf der Nabe 20 positioniert und zu dieser zentriert ist, um das Zentrierspiel quasi auf null zu reduzieren.

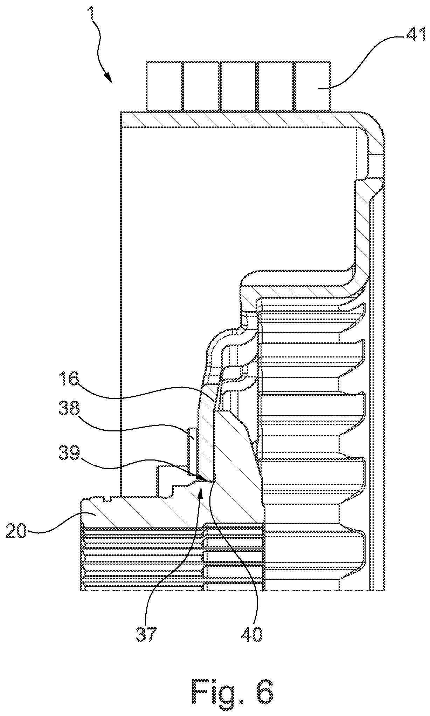

Fig. 6 zeigt eine Längsschnittansicht mit einer zur Fig. 5 analogen Anordnung der Nabe 20 und des darauf zentrierten Innenlamellenträgers 16. Die hier gezeigte Ausführungsform unterscheidet sich von der in Fig. 5 gezeigten Ausführungsform ausschließlich darin, dass der Innenlamellenträger 16 zum Kontakt mit einem Rotorpaket 41 einer E-Maschine in einem koaxialen Hybridmodul 1 vorgesehen ist.

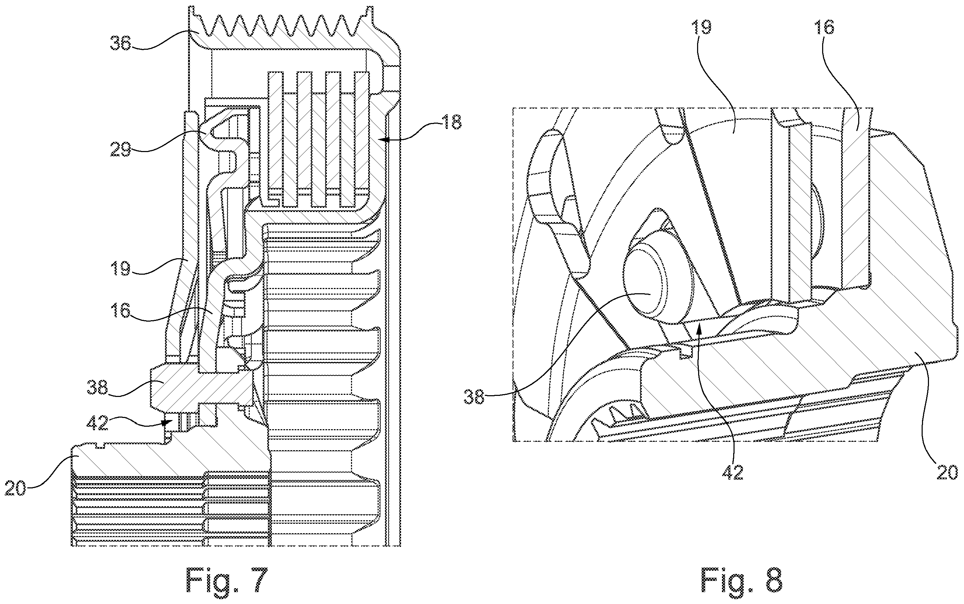

Fig. 7 und Fig. 8 zeigen eine erste beispielhafte Ausführungsform, wie die Tellerfeder 19 auf der Nabe 20 zentriert werden kann. In der hier gezeigten ersten beispielhaften Ausführungsform wird hierzu der Zentrierbolzen 38 verwendet, über den der Innenlamellenträger 16 drehfest mit der Nabe 20 verbunden ist. Insbesondere aus Fig. 8 ist zu erkennen, dass die Tellerfeder 19 hierfür an ihrem Innendurchmesser Öffnungen 42 aufweist, in denen jeweils ein Zentrierbolzen 38 so eingesetzt bzw. aufgenommen werden kann, dass die Tellerfeder 19 mit einem kleinen / minimalen radialen Spiel bzgl. der Nabe 20 zentriert ist und in Umfangsrichtung positioniert ist.

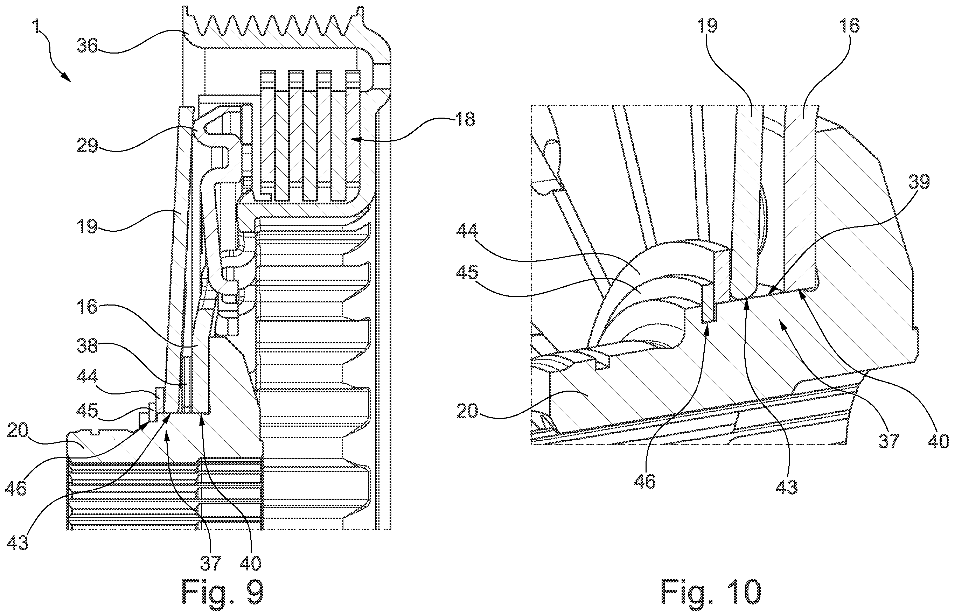

Die Fign. 9 und 10 zeigen eine zweite beispielhafte Ausführungsform zur Tellerfederzentrierung, in der die Tellerfeder 19 analog zu dem Innenlamellenträger 16 über den Zentrierbereich 37 auf der Nabe 20 zentriert wird. Hierfür wird der Zentrierbereich 37 im Vergleich zur ersten beispielhaften Ausführungsform in Axialrichtung gesehen länger ausgeführt, sodass sowohl der Innenlamellenträger 16 als auch die Tellerfeder 19 jeweils über einen an ihrem jeweiligen Innendurchmesser ausgebildeten Zentriersitz 40 bzw. 43 bzgl. der Nabe 20 zentrierbar sind. Der Innenlamellenträger 16 ist hier beispielhaft als der Innenlamellenträger mit integrierter Riemenscheibe 36, wie für ein achsparalleles Hybridmodul 1 üblich, dargestellt, jedoch ist diese Art der Tellerfederzentrierung auch für ein koaxiales Hybridmodul 1 denkbar.

Die Tellerfeder wird zusätzlich über einen Tellerfederstützring 44 abgestützt und über einen Sicherungsring 45, der in eine an der Nabe 20 vorgesehene Nut 46 eingreift, gegen Axialverschiebung gesichert. Bei dieser zweiten Ausführungsform wird der Zentrierbolzen 38 nicht zur Zentrierung der Tellerfeder 19 verwendet.

### Bezugszeichenliste

- 1: Hybridmodul
- 2: Zwischenwelle
- 3: Antriebswelle
- 4: Trennkupplung
- 5: Stützlagerung
- 6: Gehäuse
- 7: Anfahrelement
- 8: Kupplung
- 9: Zwischenwand
- 10: Motorseite
- 11: Getriebeseite
- 12: Zweimassenschwungrad
- 13: Außenlamellenträger
- 14: Lamellenkupplung
- 15: Riemen
- 16: Innenlamellenträger
- 17: Aus- / Einrückvorrichtung
- 18: Lamellenpaket
- 19: Tellerfeder
- 20: Nabe
- 21: Welle-Nabe-Verbindung
- 22: Zentral- / Sicherungsschraube
- 23: Einfachkupplung
- 24: Schwungrad
- 25: Kupplungsscheibe
- 26: Reibelement
- 27: Leitung
- 28: Nehmerzylinder (CSC)
- 29: Modulationsfeder
- 30: Lager
- 31: Sicherungsring
- 32: Nut
- 33: Lager
- 34: Rillenkugellager
- 35: Schrägkugellager
- 36: Riemenscheibe
- 37: Zentrierbereich
- 38: Zentrierbolzen
- 39: Zentrierbund
- 40: Zentriersitz
- 41: Rotorpaket
- 42: Öffnung
- 43: Zentriersitz
- 44: Tellerfederstützring
- 45: Sicherungsring
- 46: Nut

- 101: Verschraubung
- 102: Zwischenwelle
- 103: Verschraubung/Vernietung/Verschweißung
- 104: Innenlamellenträger
- 105: Nut
- 106: Vernietung
- 107: Zentrierdurchmesser
- 108: Anschlag
- 109: Abstützring
- 110: Verzahnung
- 111: Loch
- 112: Drucktopfzentrierung
- 113: Stützlager
- 114: Verzahnung
- 115: Anpressplatte
- 116: Nabe
- 117: Innenring
- 118: Innenring
- 119: Nabe
- 120: Lager
- 121: Außenring
- 122: Zwischenwand
- 123: Zentralausrücker
- 124: Bauraum

## Patentansprüche

1. Kupplung (4) für einen Antriebsstrang eines Kraftfahrzeugs, mit einem Drehmomenteinleitungsteil (13) das zur Drehmomentübergabe mit einem Drehmomentausleitungsteil (16) verbindbar ist, wobei das Drehmomentausleitungsteil (16) drehfest mit einem Drehmomentweiterleitungsteil (2, 20) verbunden ist, wobei das Drehmomentweiterleitungsteil (2, 20) einen Zentrierbund (39) aufweist, der mit einem Zentriersitz (40) am Drehmomentausleitungsteil (16) zum Zentrieren des Drehmomentausleitungsteils (16) relativ zum Drehmomentweiterleitungsteil (2, 20) zusammenwirkt, **dadurch gekennzeichnet, dass** die Kupplung (4) als eine Lamellenkupplung (14) mit einer Tellerfeder (19) als Vorspannelement und der Zentrierbund (39) zum Kontaktieren und Zentrieren der Tellerfeder (19) ausgelegt ist.

2. Kupplung (4) gemäß Anspruch 1, **dadurch gekennzeichnet, dass** das Drehmomentweiterleitungsteil (2, 20) einteilig oder mehrteilig ausgebildet ist.

3. Kupplung (4) gemäß Anspruch 1 oder 2, **dadurch gekennzeichnet, dass** der Drehmomentweiterleitungsteil (2, 20) eine Nabe (20) und eine Zwischenwelle (2) aufweist, wobei die Nabe (20) auf der Zwischenwelle (2) angeordnet ist.

4. Kupplung (4) gemäß Anspruch 3, **dadurch gekennzeichnet, dass** der Zentrierbund (39) an der Nabe (20) ausgebildet ist.

5. Kupplung (4) gemäß einem der Ansprüche 1 bis 4, **dadurch gekennzeichnet, dass** der Zentriersitz (40) an einem Innendurchmesser und/oder als Vorsprung oder Absatz des Drehmomentausleitungsbauteils (20) ausgebildet ist.

6. Kupplung (4) gemäß einem der Ansprüche 1 bis 5, **dadurch gekennzeichnet, dass** das Drehmomentausleitungsbauteil (16) über einen Presssitz auf dem Drehmomentweiterleitungsbauteil (2, 20) angeordnet ist.

7. Kupplung (4) gemäß Anspruch 1, **dadurch gekennzeichnet, dass** Verbindungsniete und/oder Verbindungsbolzen (38), die das Drehmomentausleitungsteil (16) und das Drehmomentweiterleitungsteil (2, 20) verbinden, als Zentrierung und/oder Umfangspositionierung der Tellerfeder (19) dienen.

8. Hybridmodul (1) für einen Antriebsstrang eines Kraftfahrzeugs mit einem ersten Antriebsaggregat und einem zweiten Antriebsaggregat, die über eine Kupplung (4) nach einem der vorhergehenden Ansprüche mit einer Antriebswelle (3) drehmomentübertragend verbindbar sind.

## Claims

1. A clutch (4) for a drive train of a motor vehicle having a torque-introducing part (13) which is connectable for the transfer of torque to a torque-discharging part (16), wherein the torque-discharging part (16) is connected to a torque-transmitting part (2, 20) for rotation therewith, wherein the torque-transmitting part (2, 20) has a centring collar (39) that interacts with a centring seat (40) on the torque-discharging part(16) for centring the torque-discharging part (16) relative to the torque-transmitting part (2, 20), **characterised in that** the clutch (4) is designed as a multiple disc clutch (14) having a disc spring (19) as a preloading element and the centring collar (39) for contacting and centring the disc spring (19).

2. The clutch (4) according to claim 1, **characterised in that** the torque-transmitting part (2, 20) is formed in one piece or in a plurality of pieces.

3. The clutch (4) according to claim 1 or 2, **characterised in that** the torque-transmitting part (2, 20) has a hub (20) and an intermediate shaft (2), wherein the hub (20) is arranged on the intermediate shaft (2).

4. The clutch (4) according to claim 3, **characterised in that** the centring collar (39) is formed on the hub (20).

5. The clutch (4) according to one of claims 1 to 4, **characterised in that** the centring seat (40) is formed on an inner diameter and/or as a protrusion or shoulder of the torque-transmitting part (20).

6. The clutch (4) according to one of claims 1 to 5, **characterised in that** the torque-discharging part (16) is arranged on the torque-transmitting part (2, 20) by means of a press fit.

7. The clutch (4) according to claim 1, **characterised in that** connecting rivets and/or connecting bolts (38) that connect the torque-discharging part (16) and the torque-transmitting part (2, 20) are used for centring and/or circumferential positioning of the disc spring (19).

8. A hybrid module (1) for a drive train of a motor vehicle having a first drive assembly and a second drive assembly which is connectable to a drive shaft (3) by means of a clutch (4) according to one of the preceding claims.

## Revendications

1. Embrayage (4) pour une chaîne cinématique d'un véhicule à moteur, comprenant une partie d'entrée (13) de couple qui peut être reliée à une partie de sortie (16) de couple pour la transmission d'un couple, dans lequel la partie de sortie (16) de couple est reliée de manière solidaire en rotation à une partie de transfert (2, 20) de couple, dans lequel la partie de transfert (2, 20) de couple présente un collet (39) de centrage, qui coopère avec un logement (40) de centrage sur la partie de sortie (16) de couple pour le centrage de la partie de sortie (16) de couple par rapport à la partie de transfert (2, 20) de couple, **caractérisé en ce que** l'embrayage (4) est conçu comme un embrayage multidisque (14) avec un ressort à disques (19) comme élément de précontrainte et le collet (39) de centrage pour venir en contact avec le ressort à disques (19) et le centrer.

2. Embrayage (4) selon la revendication 1, **caractérisé en ce que** la partie de transfert (2, 20) de couple est formée en une ou plusieurs parties.

3. Embrayage (4) selon la revendication 1 ou 2, **caractérisé en ce que** la partie de transfert (2, 20) de couple présente un moyeu (20) et un arbre intermédiaire (2), le moyeu (20) étant disposé sur l'arbre intermédiaire (2).

4. Embrayage (4) selon la revendication 3, **caractérisé en ce que** le collet (39) de centrage est formé sur le moyeu (20).

5. Embrayage (4) selon l'une quelconque des revendications 1 à 4, **caractérisé en ce que** le logement (40) de centrage est formé sur un diamètre intérieur et/ou comme saillie ou décrochement de la partie de sortie (20) de couple.

6. Embrayage (4) selon l'une quelconque des revendications 1 à 5, **caractérisé en ce que** la partie de sortie (16) de couple est disposée par un ajustement serré sur la partie de transfert (2, 20) de couple.

7. Embrayage (4) selon la revendication 1, **caractérisé en ce que** des rivets d'assemblage et/ou des boulons d'assemblage (38), qui relient la partie de sortie (16) de couple et la partie de transfert (2, 20) de couple, servent de centrage et/ou de positionnement périphérique du ressort à disques (19).

8. Module hybride (1) pour une chaîne cinématique d'un véhicule à moteur, comprenant un premier groupe motopropulseur et un second groupe motopropulseur, qui peuvent être reliés à un arbre d'entraînement (3) de manière à transmettre un couple par l'intermédiaire d'un embrayage (4) selon l'une quelconque des revendications précédentes.
